Europäisches Patentamt

European Patent Office

Office européen des brevets

(11) Publication number: **0 057 945**
**B1**

(12) **EUROPEAN PATENT SPECIFICATION**

(45) Date of publication of patent specification: **28.08.85**

(51) Int. Cl.⁴: **B 01 D 53/18, B 01 D 47/12**

(21) Application number: **82200033.7**

(22) Date of filing: **13.01.82**

(54) **Column for treating gases.**

(30) Priority: **03.02.81 GB 8103267**

(43) Date of publication of application:
**18.08.82 Bulletin 82/33**

(45) Publication of the grant of the patent:
**28.08.85 Bulletin 85/35**

(84) Designated Contracting States:
**DE FR GB NL**

(56) References cited:
**DD-A- 136 105**
**DE-A-2 538 213**
**DE-A-2 745 117**
**DE-B- 5 177**
**US-A-3 605 388**

(73) Proprietor: **SHELL INTERNATIONALE
RESEARCH MAATSCHAPPIJ B.V.
Carel van Bylandtlaan 30
NL-2596 HR Den Haag (NL)**

(72) Inventor: **Darton, Richard Charles
Carel van Bylandtlaan 30
NL-2596 HR The Hague (NL)**

(74) Representative: **Aalbers, Onno et al
P.O. Box 302
NL-2501 CH The Hague (NL)**

Courier Press, Leamington Spa, England.

## Description

The present invention relates to a column for treating gases, in particular gases containing liquid and/or solid particles.

For treating gases to remove gaseous contaminants frequently columns are applied wherein a gas stream containing gaseous contaminants is contacted with a countercurrently flowing washing liquid. The composition of the washing liquid is so chosen that the gaseous contaminants of the gas stream are dissolved in the washing liquid. Such a treatment is, for example, applied to produced natural gas prior to further transportation of the gas. Natural gas is often produced in a wet condition, that is the flow of predominantly light hydrocarbons often contains water vapour. The water vapour is usually removed prior to the gas entering a pipeline to prevent corrosion of the wall of the pipeline.

To remove the water vapour the gas is supplied into a column where it is contacted with a countercurrently flowing absorbent such as triethylene glycol. By this contact the water vapour is removed by the absorbent. Apart from water vapour natural gas contains in many cases also droplets of a heavier hydrocarbon. The presence of such droplets is highly undesirable, as these droplets may easily cause foaming of the absorbent, thereby limiting the throughput in the column and causing entrainment of glycol by the gas stream leaving the column. Therefore, steps are to be taken to remove these droplets from the natural gas prior to contacting the gas with the absorbent.

Another example of the treatment of gases is formed by the treatment of reactor effluent streams resulting from processes for hydrocracking oil fractions. Such reactor effluent streams consist of hydrocracked oil, water and a gas, being mainly hydrogen. After separating off the oil and water from the gas, the gas is washed with fresh water to remove traces of ionic contaminants, such as fluoride, ammonia and bisulphide. In this washing process it is important that the gas does not contain oil droplets, since these droplets would severely contaminate the fresh water so that further treatment of the water is necessary before the water is re-used as washing agent.

Although the above example relate to gases containing liquid contaminants, it is also possible that gases contain solid contaminants, which are to be removed prior to the washing process.

From the above it will be clear that prior to washing a gas, it is important that liquid and/or solid particles which would contaminate the washing liquid are removed from the gas.

A well-known way of doing this is to remove the liquid and/or solid particles from the gas in a separator vessel prior to contacting the gas with a washing liquid in a separate vessel, the wash column. The application of two vessels, however, is expensive, especially at high pressures when specially constructed vessels are necessary.

Therefore, the separating and washing operations are commonly combined in only one vessel. An example of such a vessel is known from German patent specification 2,538,213. This publication discloses a vessel in which during operation a gas containing liquid and/or solid particles is forced to enter into the upper part of the vessel in which a part of the liquid and/or solid particles are removed from the gas stream. The separated liquid and/or solid particles are subsequently collected and prevented from flowing into the lower part of the vessel by the arrangement of a separating wall, also called draw-off tray. The gas is then caused to flow to the lower part of the vessel, in which lower part the gas is washed with a washing agent. To permit the gas to flow from the upper part into the lower part of the vessel such a draw-off tray is provided with gas passage means. Measures are to be taken to avoid that the separated liquid and/or solid particles will flow into the lower part of the vessel via said gas passage means. The separation of liquid and/or solid particles from the gas in the upper part of the vessel is effected by a separating device provided with swirl imparting means to impart a rotary motion of the gas.

In such separating devices, which are well known as such gas is caused to pass swirl imparting means so that the gas is brought into a rotary motion where upon liquid and/or solid particles are flung outwardly and impinge and collect upon the wall of the separating device. These separating devices may also be used as means for intimately contacting gas with liquid, for example a washing liquid. In the latter case liquid and gas are caused to pass countercurrently the swirl imparting means. An example of devices with swirl imparting means used for contacting gas with liquid is described in German document DE—B—M5177 lvb/12n.

The object of the present invention is to provide an improved combined separation and washing column for treating gases containing liquid and/or solid contaminants having a greater efficiency than obtainable with the known columns of this type.

To meet this object the inventor proposes a column for cleaning a gas that contains liquid and/or solid particles and gaseous contaminants by separation of the said liquid and/or solid particles from the gas in a separating space and by subsequent absorption of the said gaseous contaminants from the gas by contacting the gas intimately with a washing liquid in a washing space, in which column the separating space and the washing space are separated from each other by a tray structure provided with a plurality of openings for the passage of gas, the column further comprising gas inlet means for supplying gas to be cleaned to the separating space, liquid inlet means for supplying fresh washing liquid to the washing space, gas outlet means for discharging the cleaned gas from the washing space, liquid outlet means for discharging spent washing liquid from the washing space, outlet means for discharging separated liquid and/or solid particles from the separating space and impingement means within the separating space for separating liquid and/or solid particles from the gas to be cleaned, characterized in that the said tray structure constitutes a second separating space for additionally separating liquid and/or solid particles from the gas leaving the first separating space and in that the second separating space comprises (1) a pair of parallel walls arranged one above the other, (2) a plurality of open ended tubular elements which extend between the two walls for the passage of gas from the separating space to the washing space and house swirl imparting means to separate liquid and/or solid particles from the gas and (3) means to discharge separated liquid and/or solid particles from the second separating space.

The tray structure in the proposed apparatus not only serves to separate liquid and/or solid particles separated in the separating space from the washing liquid in the washing space thereby preventing contamination of the washing liquid, but also serves as a further separating zone enabling a further removal of particles from the gas prior to introduction of the gas into the washing space. As the gas has already been pretreated in the separating space, the separating zone is only moderately loaded with liquid and/or solid particles so that the swirl imparting means in said separating zone can be most efficiently used for a further treatment of the pretreated gas.

The invention will now be described by way of example in more detail with reference to the drawings, wherein:

Figure 1 shows a vertical cross-section of a suitable embodiment of the invention;

Figure 2 shows cross-section II—II of Figure 1; and

Figure 3 shows an alternative of detail III shown in Figure 1.

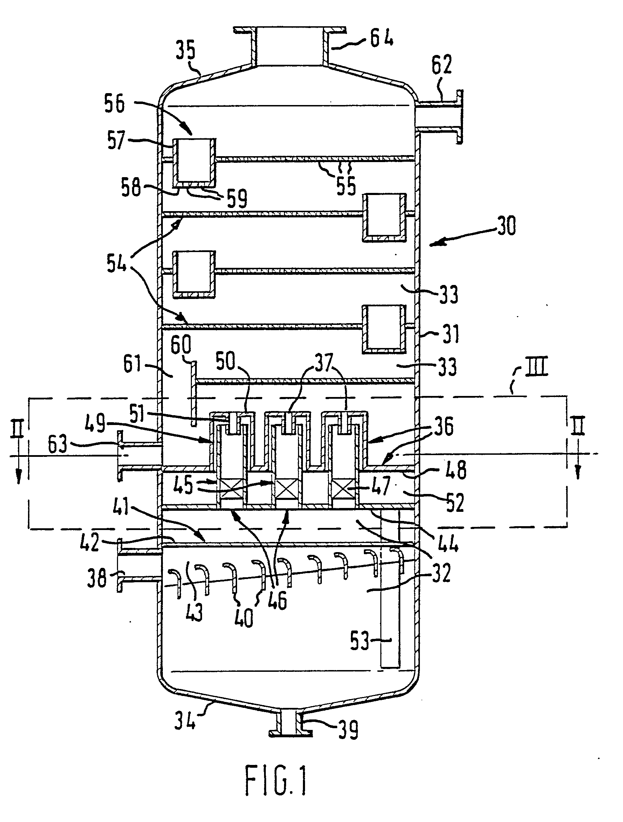

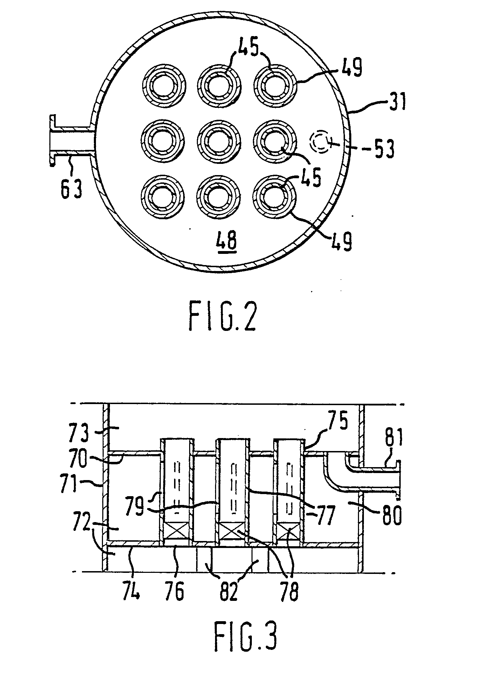

Reference is made to Figures 1 and 2 illustrating a suitable embodiment of the invention. A column indicated by reference numeral 30 comprises a tubular side wall 31 enclosing in lateral direction a separating space 32 and a washing space 33. The separating space 32 is confined in downward direction by a bottom wall 34 of the column 30. A top wall 35 of the column 30 confines the washing space 33 in upward direction. A tray structure 36, being composed of elements to be described hereinafter, forms the boundary between the separating space 32 and the washing space 33. Openings 37 are provided in the tray structure 36 for the passage of gas from the separating space 32 into the washing space 33. Via an inlet 38 arranged in an opening of the tubular side wall 31 gas may be supplied into the separating space 32. For removing matter collected in the bottom part of the separating space an outlet 39 is arranged in the bottom wall 34. Behind the gas inlet 38, viewed in the direction of the flow of gas, are situated a number of vanes 40, being so arranged that each of the vanes intercepts part of the gas stream from the inlet 38 and deflects it downwardly. The vanes 40 are arranged in a box-like structure 41 having a top wall 42 and two side walls, one thereof being shown in Figure 1 and indicated by reference numeral 43. The vanes 40 are bounded at their sides by the said side walls. At some distance above the box-like structure 41 a tray 44 has been arranged, being supported by the tubular side wall 31 of the column 30.

The tray structure comprises two substantially parallel walls 44 and 48 arranged substantially above one another and defining a further separating zone 52. A number of tubular elements 45 for the passage of gas from the separating space 32 into the washing space 33 are arranged in openings 46 of the tray 44. The interior of each of these tubular elements 45 is provided with a vane assembly, schematically shown and indicated by reference numeral 47 in Figure 1. The upper wall 48 is so arranged above the tray 44 with the tubular elements 45 that co-axially with each of the vane assemblies 47 an opening 37 of the tray structure 36 is arranged. The upper tray 48 — arranged at some distance above and substantially parallel to the tray 44 — is provided with a number of tubular elements 49 — each thereof being arranged over a tubular element 45 on the tray 44 — said elements 49 having cover plates 50 in which the openings 37 are arranged. Downwardly extending tubes 51 are mounted in the openings 37 in such a manner that the lower ends of the tubes 51 are positioned within the tubular elements 45. The space 52 between the tray 44 and the tray structure 36 is in fluid communication with the bottom part of the column 30 via a discharge tube 53.

The washing space 33, confined in downward direction by the tray structure 36 is provided with a number of parallel washing trays 54 having perforations 55 for the passage of gas. Apart from the lowermost washing tray each of the washing trays 54 is provided with a downcomer duct 56 having a tubular side wall 57 and a bottom wall 58. In the bottom wall 58 liquid discharge openings 59 are arranged. Between the inner surface of the tubular side wall 31 and a vertical plate 60 secured to a part of the circumference of the lowermost washing tray 54 a fluid passage 61 is present. A liquid inlet 62 and a liquid outlet 63 are arranged in the side wall 31 for the supply and discharge, respectively, of washing liquid. Finally, a gas outlet 64 for the discharge of treated gas is arranged in the top wall 35 of the column 30.

In operation a gas containing contaminants in the form of liquid and/or solid particles, is introduced via the inlet 38 into the box-like structure 41 provided with the vanes 40, arranged within the separating space 32. Since the vanes 40 have a curved shape the consequence of the inertia and centrifugal force is that the liquid and/or solid particles strike the vane surfaces and that a separation between those particles and gas is simultaneously effected. The liquid and/or solid particles will fall downwardly towards the bottom wall 34, and are subsequently discharged from the separating space 32 via the outlet 39. The gas stream leaving the box-like structure 41 with the vanes 40 flows in upward direction towards the openings 46 in the tray 44. The vanes 40 are arranged in such a manner that substantially equal amounts of gas will enter into the interior of each of the tubular elements 45 via the openings 46. Upon contact with the vane assemblies 47 the liquid and/or solid particles being left in the gas stream leaving the box-like structure 41 are flung outwardly and are subsequently discharged from the tubular elements 45 over the upper ends thereof. The separated liquid and/or solids are collected in the separating zone 52 and subsequently discharged via the discharge tube 53 towards the bottom part of the column and removed from the separating space 32 via the outlet 39. When the gas to be treated contains mainly solid particles and substantially no liquid particles it is advantageous to use an inclined or curved tray instead of the horizontal tray 44 and to install the discharge tube 53 at or near the lowest part of such a curved or inclined tray.

The gas freed from liquid and solid contaminants leaves the separating zone 52 and enters into the washing space 33 via the tubes 51. In the washing space washing liquid flows in downward direction after being supplied via the liquid inlet 62. The washing liquid flows from a washing tray 54 towards a next lower washing tray 54 via the downcomer ducts 56. The gas from the tubes 51 flows via the perforations 55 of the trays 54 in upward direction and is thereby contacted with the washing liquid on the trays 54. By this contact components of the gas stream may be dissolved in or entrained by the washing liquid. The gas freed from specific components is removed from the washing space 33 via the gas outlet 64. The washing liquid having reached the lowermost tray 54 will flow over the upper end of the vertical plate 60 towards the tray surface 48 forming part of the tray structure 36 separating the washing space 33 from the separating space 32. The washing liquid with dissolved or entrained liquid or solid contaminants collected on tray surface 48 is discharged from the washing space 33 via the outlet 63. The vertical plate 60 has its lower end positioned below the level of the openings 37 in the tray structure 36, thereby preventing washing liquid raining into these openings. The gas pressure in the washing space 33 is so chosen that the washing liquid cannot pass through the perforations 55 in the trays 54 but is forced to flow via the downcomer ducts 57 and passage 61 between the column wall 31 and the plate 60 towards the tray surface 48.

Reference is now made to Figure 3 showing an alternative of detail III shown in Figure 1.

A tray structure comprising two substantially flat trays 70 and 74 defining a separating zone 80 divides the interior of a column with column wall 71 into a separating space 72 and a washing space 73. The trays 70 and 74 are provided with a plurality of openings 75 and 76, respectively. The separating space 72 is provided with a plurality of open-ended tubular elements 77, for the passage of gas from the separating space into the washing space, each of the elements passing through an opening 75 of the tray 70 and being mounted in an opening 76 of the tray 74. In each of the open-ended tubular elements 77 a vane assembly 78, being schematically indicated in Figure 3, is arranged. In the side wall of each open-ended tubular element 77 a number of longitudinal openings 79 are arranged, allowing the discharge of matter from the said element 77 into the space 80 — forming part of the separating space 72 — enclosed by the trays 70 and 74 and the column wall 71. It is observed that the upper end of each of the longitudinal openings 79 is positioned at least below the tray 70. The upper tray 70 is further provided with a curved tube 81 passing through an opening in the column wall 71, for the removal of liquid from the washing space 73. The curved tube 81 passes through an opening in the column wall 71. The lower tray 74 is provided with a number of downwardly extending discharge tubes 82 for discharging matter collected in the separating zone 80 towards the bottom part of the column.

In operation gas containing liquid and/or solid particles, entering into the separating space 72 where a first part of the particles is removed from the gas, is forced to flow into the open-ended tubular elements 77 arranged in the separating zone 80. The vane assemblies 78 subsequently cause a separation of liquid and/or solid particles from the gas. The separated liquid and/or solid particles are discharged via the longitudinal openings 79 and subsequently removed from the space 80 via the discharge tubes 82. The main gas streams being further freed from liquid and/or solid contaminants enter into the washing space 73 via the open upper ends of the tubular elements 77. In the washing space 73 the gas is subsequently washed with a washing liquid in the same manner as described above with reference to the preceding Figures. The washing liquid flowing in downward direction through the washing space 73 is collected on the tray 70 and discharged via the liquid outlet 81. To prevent washing liquid flowing into the open-ended tubular elements 77, the upper ends of said elements 77 are arranged at least above the tray 70.

The present invention is not restricted to swirl imparting means in the form of a vane assembly as shown in Figure 1. Instead thereof any other type of swirl imparting means, such as a hub with blades, may be applied.

Further, it is observed that the present invention is not restricted to washing spaces provided with trays as shown in Figure 1. It is also possible to replace the washing trays by a system for introducing the washing liquid in the form of a mist into the upper part of the washing space. In this case, the gas flow velocity in the washing space must be rather limited to avoid that washing liquid droplets are entrained by the gas stream. On the other hand, the gas flow velocity in the openings 37 should be rather high to prevent liquid falling down through these openings.

The lowermost tray 54 in the washing space 33 of the column 30 shown in Figure 1 may be provided with a downcomer duct instead of the shown fluid passage 61.

The present invention is not restricted to discharge tubes 53, 82 arranged in the trays 44 and 74, respectively. Instead thereof, the discharge tube(s) may be arranged in (an) opening(s) in the side wall of the column.

**Claims**

1. Column for cleaning a gas that contains liquid and/or solid particles and gaseous contaminants by separation of the said liquid and/or solid particles from the gas in a separating space and by subsequent absorption of the said gaseous contaminants from the gas by contacting the gas intimately with a washing liquid in a washing space, in which column the separating space and the washing space are separated from each other by a tray structure provided with a plurality of openings for the passage of gas, the column further comprising gas inlet means for supplying gas to be cleaned to the separating space, liquid inlet means for supplying fresh washing liquid to the washing space, gas outlet means for discharging the cleaned gas from the washing space, liquid outlet means for discharging spent washing liquid from the washing space, outlet means for discharging separated liquid and/or solid particles from the separating space and impingement means within the separating space for separating liquid and/or solid particles from the gas to be cleaned, characterized in that the said tray structure constitutes a second separating space for additionally separating liquid and/or solid particles from the gas leaving the first separating space and in that the second separating space comprises (1) a pair of parallel walls arranged one above the other, (2) a plurality of open ended tubular elements which extend between the two walls for the passage of gas from the separating space to the washing space and house swirl imparting means to separate liquid and/or solid particles from the gas and (3) means to discharge separated liquid and/or solid particles from the second separating space.

2. Column according to claim 1, characterized in that the column is further provided with conduit means for discharging liquid and/or solid particles from the further separating zone into the separating space at a level below the impingement means.

3. Column according to claim 1 or 2, characterized in that the upper ends of the open ended tubular elements extend above the parallel walls to provide a collecting space for washing liquid.

4. Column according to any one of the claims 1—3, characterized in that the open ended tubular elements have their upper ends encompassed by further open ended tubular elements having upper ends extending above the upper ends of the first mentioned tubular elements, the first mentioned open ended tubular elements being mounted on the lower wall and the last mentioned tubular elements being mounted on the upper wall of said pair of parallel walls.

**Patentansprüche**

1. Säule zum Reinigen eines Flüssig- und/oder Feststoff-Teilchen sowie gasförmige Verunreinigungen enthaltenden Gases, wobei die genannten Flüssig- und/oder Feststoff-Teilchen vom Gas in einem Trenn-Raum getrennt werden und anschließend die gasförmigen Verunreinigungen aus dem Gas derart absorbiert werden, daß das Gas in innigen Kontakt mit einer Waschflüssigkeit in einem Wasch-Raum gebracht wird, wobei in der Säule der Trenn-Raum und der Wasch-Raum voneinander durch eine schalenartige Einrichtung getrennt sind, welche mit einer Vielzahl von Öffnungen zum Durchlassen des Gases versehen ist und wobei die Säule weiterhin folgende Einrichtungen aufweist: eine Gas-Einlaßeinrichtung zum Zuführen von zu reinigendem Gas in den Trenn-Raum, Flüssigkeits-Einlaßeinrichtungen zum Zuführen von frischer Wasch-Flüssigkeit in den Wasch-Raum, Gas-Auslaßeinrichtungen zum Entnehmen des gereinigten Gases aus dem Wasch-Raum, Flüssigkeits-Auslaßeinrichtungen zum Entnehmen verbrauchter Waschflüssigkeit aus dem Wasch-Raum, Auslaß-Einrichtungen zum Entnehmen von abgetrennten Flüssigkeits- und/oder Feststoff-Teilchen aus dem Trenn-Raum und Aufprall-Einrichtungen innerhalb des Trenn-Raumes zum Trennen der Flüssig- und/oder Feststoff-Teilchen vom zu reinigenden Gas, dadurch gekennzeichnet, daß die schalenartige Einrichtung einen zweiten Trenn-Raum bildet zum zusätzlichen Trennen von Flüssig- und/oder Feststoff-Teilchen aus dem den ersten Trennraum verlassenden Gas und daß der zweite Trenn-Raum 1. ein Paar von parallelen, übereinander angeordneten Wänden, 2. eine Vielzahl von offenen Rohren, welche zwischen den Wänden zum Durchlassen von Gas aus dem Trenn-Raum in den Wasch-Raum angeordnet sind und Verwirbelungseinrichtungen aufweisen, um Flüssig- und/oder Feststoff-Teilchen vom Gas zu trennen, und 3. Einrichtungen zum Entnehmen der abgetrennten Flüssig- und/oder Feststoff-Teilchen aus dem zweiten Trenn-Raum aufweist.

2. Säule nach Anspruch 1, dadurch gekennzeichnet, daß die Säule weiterhin mit einer Leitung versehen ist, um Flüssig- und/oder Feststoff-Teilchen aus der weiteren Trenn-Zone in den Trenn-Raum in einer Ebene unterhalb der Aufprall-Einrichtungen zu entladen.

3. Säule nach einem der Ansprüche 1 oder 2, dadurch gekennzeichnet, daß die oberen Enden der offenen Rohre sich oberhalb der parallelen Wände erstrecken, um einen Sammel-Raum für Waschflüssigkeit zu bilden.

4. Säule nach einem der Ansprüche 1—3, dadurch gekennzeichnet, daß die offenen oberen Enden der Rohre durch weitere offene Rohre umgeben sind, deren obere Enden sich über die oberen Enden der zuerst genannten Rohre erstrecken, wobei die zuerst genannten offenen Rohre auf der unteren Wand befestigt und die zuletzt genannten Rohre auf der oberen Wand der genannten parallelen Wände befestigt sind.

**Revendications**

1. Colonne de nettoyage d'un gaz qui contient des particules liquides et/ou solides et des impuretés gazeuses par séparation des dites particules liquides et/ou solides du gaz dans un espace de séparation et par absorption consécutive des dites impuretés gazeuses du gaz en amenant le gaz en contact intime avec un liquid de lavage dans un espace de lavage, colonne dans laquelle l'espace de séparation et l'espace de lavage sont séparés l'un de l'autre par une structure en plateau munie d'une pluralité d'ouvertures pour le passage du gaz, la colonne comprenant en outre un moyen d'entrée de gaz pour introduire le gaz à nettoyer dans l'espace de séparation, un moyen d'entrée de liquide pour introduire un liquide de lavage frais dans l'espace de lavage, un moyen de sortie de gaz pour vidanger le gaz nettoyé de l'espace de lavage, un moyen de sortie de liquide pour vidanger le liquide de lavage utilisé de l'espace de lavage, un moyen de sortie pour vidanger les particules liquides et/ou solides séparées de l'espace de séparation et un moyen d'injection à l'intérieur de l'espace de séparation pour séparer les particules liquides et/ou solides du gaz à nettoyer, caractérisée en ce que la dite structure en plateau constitue un deuxième espace de séparation pour séparer davantage les particules liquides et/ou solides du gaz quittant le premier espace de séparation et en ce que le deuxième espace de séparation comprend (1) un couple de parois parallèles disposées l'une au-dessus de l'autre, (2) une pluralité d'éléments tubulaires à extrémités ouvertes qui s'étendent entre les deux parois pour le passage du gaz depuis l'espace de séparation vers l'espace de lavage et où se loge un moyen de tourbillonnement pour séparer les particules liquides et/ou solides du gaz et (3) un moyen de vidanger les particules liquides et/ou solides séparées du deuxième espace de séparation.

2. Colonne selon la revendication 1, caractérisée en ce que la colonne est munie en outre de conduits pour vidanger les particules liquides et/ou solides de la zone de séparation supplémentaire dans l'espace de séparation à un niveau situé au-dessous du moyen d'injection.

3. Colonne selon la revendication 1 ou 2, caractérisée en ce que les extrémités supérieures des éléments tubulaires à extrémités ouvertes s'étendent au-dessus des parois parallèles pour menager un espace de récupération du liquide de lavage.

4. Colonne selon l'une quelconque des revendications 1 à 3, caractérisée en ce que les éléments tubulaires à extrémités ouvertes ont leurs extrémités supérieures englobées par d'autres éléments tubulaires à extrémités ouvertes dont les extrémités supérieures s'étendent au-dessus des extrémités supérieures des premiers éléments tubulaires mentionnés, les premiers éléments tubulaires à extrémités ouvertes mentionnés étant montés sur la paroi inférieure et les dernier éléments tubulaires à extrémités ouvertes mentionnés étant montés sur la paroi supérieure du dit couple de parois parallèles.

FIG.1

FIG.2

FIG.3